# EUROPÄISCHE PATENTSCHRIFT

(11) **EP 2 196 781 B1**
(45) Veröffentlichungstag und Bekanntmachung des Hinweises auf die Patenterteilung: **05.10.2011**
(21) Anmeldenummer: 08021535.3
(22) Anmeldetag: 11.12.2008
(51) Int. Cl.: G01F 23/296, G01N 9/18

(54) **Vorrichtung und Verfahren zum Bestimmen der Dichte einer Flüssigkeit**
Device and procedure to determine the density of a liquid
Dispositif et procédé destinés à la détermination de la densité d'un liquide

(43) Veröffentlichungstag der Anmeldung: 16.06.2010
(73) Patentinhaber: FAFNIR GmbH, 22765 Hamburg (DE)
(72) Erfinder: Schrittenlacher, Dr. Wolfgang, 21075 Hamburg (DE); Maurer, Christian, Dr., 22547 Hamburg (DE)
(74) Vertreter: UEXKÜLL & STOLBERG

(56) Entgegenhaltungen:
- EP-A- 1 881 316
- US-A1- 2007 282 540
- US-B2- 7 403 860

## Beschreibung

Die Erfindung betrifft eine Vorrichtung und ein Verfahren zum Bestimmen der Dichte einer Flüssigkeit, insbesondere zum Bestimmen der Dichte von Kraftstoff in einem Lagertank, z.B. auf einer Tankstelle, in einem Tanklager oder bei einem Tankkraftfahrzeug. Die derart gemessene bzw. bestimmte Dichte kann bei der Datenverwaltung auf Tankstellen und für die Qualitätssicherung benutzt werden. Denn für die Bestimmung der Qualität von Flüssigkeiten ist ihre Dichte ein wichtiger Indikator.

In vielen Lagertanks werden Flüssigkeiten aufbewahrt, wobei je nach Anwendung, z.B. für den Abrechnungsmodus, das Volumen oder die Masse der gelagerten Flüssigkeit bekannt sein muss. Während das Volumen über den Füllstand mit Hilfe einer sogenannten Peiltabelle bestimmt werden kann, lässt sich die Masse aus dem Volumen und der Dichte ermitteln.

Schon lange bekannt ist es, die Dichte einer Flüssigkeit mit Hilfe von Schwimmeraräometern zu messen. Da ein Aräometer nicht vollständig in die Flüssigkeit eintaucht, wandert es mit der Füllhöhe der Flüssigkeit in einem Vorratsbehälter mit, was für eine kontinuierliche Messung bei wechselnden Pegeln oder Füllständen nicht geeignet ist.

So wird in der US 7 278 311 eine Dichtemessung für den Tankstellenbereich beschrieben, bei der die Dichte und der Füllstand jeweils an der Flüssigkeitsoberfläche gemessen werden. Nachteilig ist hierbei nicht nur, dass die Messung an der Flüssigkeitsoberfläche und nicht in der Entnahmezone im unteren Bereich des Behälters erfolgt, sondern auch, dass hierfür eine sehr große Durchführung (4 Zoll) durch die Behälterwandung erforderlich ist, die in der Regel nicht zur Verfügung steht.

In der US 5 942 684 ist ein Verfahren offenbart, bei dem die Dichte über die Wegverschiebung eines Auftriebskörpers bestimmt werden kann, der gegen ein elastisches Element arbeitet. Dabei wird die Auftriebskraft über einen Dehnungsmessstreifen gemessen.

Eine ähnliche Möglichkeit ist in der US 6 418 788 beschrieben. Dabei verschiebt sich ein Auftriebskörper in einer Anordnung mit zwei Schraubenfedern, und der Verschiebungsweg wird mit Hilfe eines Halleffektsensors bestimmt.

In der US 5 471 873 und der US 5 253 522 ist offenbart, wie eine Dichtemessung in ein bereits vorhandenes Füllstandmesssystem integriert werden kann. Hierbei ist oberhalb und unterhalb eines Auftriebskörpers jeweils eine Schraubenfeder angebracht, so dass sich der Auftriebskörper je nach Höhe der Auftriebskraft, also je nach Größe der Dichte der Flüssigkeit, in der sich der Auftriebskörper befindet, gegen die Federkräfte verschiebt. Diese Wegverschiebung wird über eine magnetostriktive Positionsmessung mit hoher Genauigkeit bestimmt. Die magnetostriktive Positionsmessung ist eine bekannte Technik (siehe z.B. US 3 189 849 und US 3 225 312) und wird wegen ihrer Vorteile für Positionsmessaufgaben im Maschinenbau und in der Füllstandmesstechnik eingesetzt.

Bei Lagertanks, in denen der Füllstand mittels eines magnetostriktiven Positionsmesssystems bestimmt wird, stehen in der Regel nur kleine Durchführungen für den Einbau einer Messsonde zur Verfügung, z.B. Durchführungen mit 1½ Zoll Durchmesser. Diese Einschränkung gilt auch für ein Dichtemesssystem mit einem Auftriebskörper, wie in der US 5 471 873 und der US 5 253 522 beschrieben. Um die Dichte genau messen zu können, ist jedoch ein möglichst großer Auftriebskörper und/oder eine weiche Feder erforderlich, so dass ein vorgegebener Unterschied in der Auftriebskraft in einer möglichst großen Änderung der Federlänge resultiert. Bei den oben erwähnten vorbekannten Systemen gemäß US 5 471 873, US 5 253 522 und US 6 418 788 sind jeweils zwei Federn zur Führung eines Auftriebskörpers vorgesehen. Dadurch halbiert sich bei vorgegebener Federkonstante der nutzbare Messweg. Da ferner bei einer Dichtemessung über einen Auftriebskörper, der gegen ein elastisches Element arbeitet, ein Gleichgewichtszustand zwischen Auftriebskraft, Gewichtskraft und Federkraft erreicht wird, führen schon kleine Reibungseffekte zu einer Hysterese und zur Verfälschung der Messwerte. Weiterhin entsteht bei den vorbekannten Anordnungen bereits durch kleinste Ungleichgewichte ein Kippmoment im Auftriebskörper, was eine erhöhte Reibung zur Folge hat.

Die EP 1 881 316 A2 offenbart eine ähnliche Vorrichtung zum Bestimmen der Dichte einer Flüssigkeit mit einem Auftriebskörper, wobei an dem Auftriebskörper eine Feder angreift, deren elastische Deformation ein Maß für die Auftriebskraft des Auftriebskörpers ist. Die elastische Deformation der Feder wird mit einem Magneten mittels eines magnetostriktiven Positionsmesssystems erfasst. Diese Vorrichtung ist im Vergleich zu den zuvor genannten Vorrichtungen verbessert, weil die Reibung sehr gering gehalten wird, indem der Kraftangriffspunkt der Feder unterhalb des Auftriebsmittelpunktes liegt und dadurch ein Drehmoment entsteht, das den Auftriebskörper aufrichtet. Trotzdem tritt eine zwar sehr kleine, aber immer noch störende Reibungskraft dadurch auf, dass der Auftriebskörper zur Seite ausweicht und somit seine Führung berühren kann.

Es ist daher Aufgabe der Erfindung, eine Vorrichtung und ein Verfahren zum Bestimmen der Dichte einer Flüssigkeit, wie im Prinzip aus der EP 1 881 316 A2 bekannt, weiter zu verbessern und insbesondere auf Reibungskräften beruhende Messfehler zu minimieren.

Diese Aufgabe wird gelöst durch eine Vorrichtung zum Bestimmen der Dichte einer Flüssigkeit mit den Merkmalen des Anspruchs 1 sowie durch ein Verfahren zum Bestimmen der Dichte einer Flüssigkeit mit den Merkmalen des Anspruchs 10. Vorteilhafte Ausgestaltungen der Erfindung ergeben sich aus den Unteransprüchen.

Die erfindungsgemäße Vorrichtung zum Bestimmen der Dichte einer Flüssigkeit hat einen Auftriebskörper, mindestens eine an dem Auftriebskörper angreifende Feder, deren elastische Deformation ein Maß für die Auftriebskraft des Auftriebskörpers ist, und einen Magneten, der für die Erfassung der elastischen Deformation der Feder mittels eines magnetostriktiven Positionsmesssystems eingerichtet ist. Das magnetostriktive Positionsmesssystem kann Bestandteil der Vorrichtung, kann aber auch eine externe Komponente sein, die z.B. in einem Lagertank für Kraftstoff bei einem Füllstandmesssystem ohnehin vorgesehen ist.

Erfindungsgemäß ist die Feder als Spiralblattfeder gestaltet. Unter einer Spiralblattfeder ist hier nicht eine wie eine Uhrfeder spiralartig aufgewickelte Blattfeder zu verstehen, deren spiralartiger Verlauf durch plastische Deformation senkrecht zu ihrer Blattebene erreicht wird, sondern eine Feder, wie sie durch eine spiralartige Schnittführung in einem dünnen, ebenen Ausgangsmaterial gefertigt werden kann. Um nach einer solchen Schnittführung die Federform der Spiralblattfeder im unbelasteten Zustand zu erreichen, kann die Spiralblattfeder ins Dreidimensionale verformt werden, also entlang einer Achse, die senkrecht auf der Ebene des Ausgangsmaterials steht. Bei dem weiter unten erläuterten Ausführungsbeispiel ist es jedoch vorgesehen, dass die Spiralblattfeder im unbelasteten Zustand die ebene Form des Ausgangsmaterials annimmt, weshalb eine solche plastische Verformung ins Dreidimensionale unterbleibt.

Die Auftriebskraft des Auftriebskörpers ist gleich dem Gewicht der von dem Auftriebskörper verdrängten Flüssigkeit, also gleich dem Produkt aus dem Volumen des Auftriebskörpers und der Dichte (bzw. des spezifischen Gewichts) der Flüssigkeit. Je nach Größe der Auftriebskraft wird die Feder mehr oder weniger stark deformiert. Wenn sich der Magnet bei einer Deformation der Feder mitbewegt, ändert sich seine Position, was von den magnetostriktiven Positionsmesssystem erfasst werden kann.

Eine Uhrfeder ist in radialer Richtung sehr leicht elastisch verformbar. Die Spiralblattfeder der erfindungsgemäßen Vorrichtung besitzt dagegen dank ihrer Geometrie in radialer Richtung ein hohes Widerstandsmoment, so dass sich mit ihrer Hilfe eine sichere radiale Führung des Auftriebskörpers erreichen lässt. Dadurch wird verhindert, dass der Auftriebskörper mit seiner Führung in Berührung kommt, so dass irgendwelche Reibungskräfte, die der Auftriebskörper erfährt, minimiert werden. In axialer Richtung kann die Spiralblattfeder dagegen sehr weich und damit sehr empfindlich sein. Dies führt zu einer hohen Empfindlichkeit der erfindungsgemäßen Vorrichtung, da bereits geringe Unterschiede in der Dichte bzw. den Auftriebskräften in einer relativ großen Wegänderung des Auftriebskörpers resultieren.

In einer bevorzugten Ausführungsform ist die Feder als Ausschnitt aus einem ebenen Blech gefertigt. Dies kann z.B. mit Hilfe eines Laserschneidgeräts erfolgen. Das dabei entstehende Gebilde ist zunächst eben, kann dann aber in axialer Richtung (d.h. senkrecht zu der Ebene des Ausgangsmaterials) verformt werden, um die Konfiguration der Feder im unbelasteten Zustand auszubilden. Eine derartige plastische Verformung kann aber auch unterbleiben, wenn die Feder als Zugfeder (Zug in axialer Richtung) gestaltet ist und ohne Belastung eine ebene Konfiguration annimmt.

Die Feder kann eingängig (also als gewöhnliche Spirale), aber auch mit zwei Gängen oder mehr als zwei Gängen ausgestaltet sein. Im letzteren Fall geht vom Zentrum der Feder mehr als ein Spiralgang aus. Eine mehrgängige Spiralblattfeder ist härter als eine eingängige, erlaubt aber eine noch bessere radiale Führung als eine eingängige Spiralblattfeder. Da die Härte der Feder aber ferner von der Art und Dicke des Ausgangsmaterials und anderen Parametern abhängt, lässt sich auch eine mehrgängige Spiralblattfeder herstellen, mit der man eine erfindungsgemäße Vorrichtung von hoher Empfindlichkeit konstruieren kann.

Bei einer vorteilhaften Ausführungsform weist der Auftriebskörper einen oberen Bereich und einen unteren Bereich auf, und es sind zwei Federn vorgesehen, die vorzugsweise von gleicher Bauart sind. Dabei greift die eine Feder am oberen Bereich des Auftriebskörpers und die andere Feder am unteren Bereich des Auftriebskörpers an. Diese Anordnung ermöglicht eine besonders sichere radiale Führung des Auftriebskörpers, wodurch sich Reibungskräfte zwischen dem Auftriebskörper und einer Führung des Auftriebskörpers praktisch ausschließen lassen. Da in diesem Fall zwei Federn verwendet werden, ist bei gegebener, in axialer Richtung wirkender resultierender Kraft auf den Auftriebskörper der Verschiebeweg zwar kleiner als bei einer einzigen Feder. Aber die Federn können weich und empfindlich ausgestaltet sein, wie bereit erläutert, so dass sich die Verwendung von zwei Federn nicht nachteilig auswirkt.

Bei einer bevorzugten Ausführungsform der Erfindung ist außer dem bereits erwähnten Magneten ein fixierter Referenzmagnet vorgesehen, wobei die Differenz der Positionen des Magneten und des Referenzmagneten entlang eines Messdrahts des magnetostriktiven Positionsmesssystems ein Maß für die zu bestimmende elastische Deformation der Feder ist. Dies ermöglicht es, die erfindungsgemäße Vorrichtung als Einheit zu konstruieren und z.B. in Verbindung mit einem Füllstandmesssystem zu benutzen, das bereits in einem Lagertank vorhanden ist. Wenn sich der Magnet z.B. in dem Auftriebskörper befindet, so dass er die Bewegung des Auftriebskörpers mitmacht, der Referenzmagnet dagegen z.B. an einem stationären Gegenlager der Feder, ergibt sich aus der Differenz der Positionen des Magneten und des Referenzmagneten die Deformation der Feder, unabhängig davon, in welcher Höhe die Vorrichtung an dem magnetostriktiven Füllstandmesssystem montiert ist. Wenn dagegen nur ein Magnet vorhanden ist, der die Bewegung bzw. Deformation der Feder mitmacht, hängt die Einstellung der Vorrichtung von der absoluten Höhe an dem magnetostriktiven Positionsmesssystem ab und kann sich z.B. bei Wartungsarbeiten verschieben.

Vorzugsweise weist der Auftriebskörper eine Aussparung zur Aufnahme eines Führungsrohrs auf. Das Führungsrohr lässt sich vorzugsweise über ein Schutzrohr für den Messdraht eines magnetostriktiven Positionsmesssystems schieben.

Grundsätzlich können die erfindungsgemäße Vorrichtung und das damit ausgeübte Verfahren zum Bestimmen der Dichte einer Flüssigkeit mit praktisch beliebigen Flüssigkeiten verwendet werden. Besonders vorteilhaft ist die Erfindung jedoch, wenn sie zum Bestimmen der Dichte von Kraftstoff benutzt wird. In diesem Fall ist vorzugsweise als magnetostriktives Positionsmesssystem ein in einem Lagertank für Kraftstoff ohnehin vorhandenes magnetostriktives Positionsmesssystem vorgesehen, das als Füllstandmesssystem eingesetzt wird.

Derartige Füllstandmesssysteme sind weit verbreitet. Sie enthalten einen vorzugsweise vertikal ausgerichteten Messdraht in einem Schutzrohr, der mit einer Messelektronik verbunden ist. Das Schutzrohr dient gleichzeitig zum Führen eines Schwimmers, in dem ein Magnet montiert ist und der an der Oberfläche des Kraftstoffs schwimmt. Die Position dieses Magneten, also der Füllstand, kann mit Hilfe des magnetostriktiven Effekts ermittelt werden. Da die Messelektronik in der Lage ist, die Messsignale in Bezug auf mehrere Magneten, die in verschiedenen Höhen positioniert sind, zu verarbeiten, sind magnetostriktive Positionsmesssysteme in einem Lagertank für Kraftstoff häufig mit einem zweiten Schwimmer versehen, der im unteren Bereich des Lagertanks an einer Grenzfläche zwischen Wasser und dem spezifisch leichteren Kraftstoff schwimmt. Auf diese Weise ist es möglich, den Wassergehalt in dem Lagertank zu erfassen. Ein häufig in einem Lagertank bereits vorhandenes magnetostriktives Positionsmesssystem mit zugehöriger Messelektronik ist also in der Lage, die Positionen mehrerer Magneten zu bestimmen, und kann daher mit verhältnismäßig geringem Aufwand (im Wesentlichen Programmieraufwand) so umgerüstet werden, dass zusätzlich die Positionen des Magneten und gegebenenfalls des Referenzmagneten der erfindungsgemäßen Vorrichtung zum Bestimmen der Dichte gemessen werden können.

Als Lagertank für Kraftstoff kommen insbesondere Lagertanks auf einer Tankstelle oder in einem Tanklager in Betracht. Die Dichte des Kraftstoffs kann aber auch in einem Nutzlasttank eines Tankkraftfahrzeugs in der erläuterten Weise bestimmt werden.

Bei einer vorteilhaften Ausgestaltung der Erfindung werden mehrere Auftriebskörper mit zugeordneten Federn und Magneten in unterschiedlichen Höhen des magnetostriktiven Positionsmesssystems eines Lagertanks angeordnet. Dies erlaubt es, die Dichte des Kraftstoffs in unterschiedlichen Höhen zu bestimmen. Wie bereits erläutert, ist ein magnetostriktives Positionsmesssystem grundsätzlich in der Lage, die Positionen oder Höhen mehrerer Magnete zu unterscheiden.

Die für die Bestimmung der Dichte erforderlichen Rechenoperationen können auf einem in der Nähe des Lagertanks, also z.B. im Bereich einer Tankstelle vorhandenen Rechner durchgeführt werden. In die Berechnung gehen das bekannte Volumen des vollständig in die Flüssigkeit eintauchenden Auftriebskörpers, das bekannte Gewicht des Auftriebskörpers, die durch vorherige Kalibrierungsmessungen ermittelten Eigenschaften der Feder(n) sowie die gemessene Position des Magneten (bzw. die Differenz der gemessenen Positionen von Magnet und Referenzmagnet) ein, in einer dem Fachmann verständlichen Weise.

In Zusatzschritten zu dem Verfahren zum Bestimmen der Dichte kann die in der beschriebenen Weise ermittelte bzw. bestimmte Dichte für eine Vielzahl von Anwendungen benutzt werden.

Ein großes Anwendungsgebiet hierfür ist die Datenverwaltung und die Qualitätssicherung auf einer Tankstelle. So kann der gemessene bzw. bestimmte Dichtewert für den Kraftstoff in einem Lagertank mit dem über eine Füllstandmessung ermittelten Volumen des Kraftstoffs in dem Lagertank multipliziert werden, um die Masse des Kraftstoffs in dem Lagertank zu berechnen. Dies kann für Abrechnungszwecke sinnvoll sein.

Ferner ist die Dichte des Kraftstoffs (oder allgemeiner einer Flüssigkeit) ein Maß für die Zusammensetzung und/oder Qualität der Flüssigkeit, so dass man von der bestimmten Dichte auf die Kraftstoffzusammensetzung oder -qualität schließen kann.

Zusätzliche Möglichkeiten ergeben sich, wenn ein Alarm und/oder eine Notfallabschaltung ausgelöst werden, falls die mit Hilfe der erfindungsgemäßen Vorrichtung bzw. des erfindungsgemäßen Verfahrens bestimmte Dichte außerhalb eines vorgegebenen Bereichs liegt. Ein Beispiel ist die Unterscheidung von Kraftstoff und Wasser durch eine Dichtemessung, wobei gegebenenfalls ein Alarm ausgelöst wird, wenn die Dichtemessung auf das Vorliegen der falschen Flüssigkeit hinweist.

Ferner können die im Laufe der Zeit gemessenen Werte für die Dichte aufgezeichnet werden, um den Dichteverlauf z.B. in einem Lagertank für Kraftstoff zu protokollieren. Dabei kann es sinnvoll sein, zusätzlich die Temperatur der Flüssigkeit bzw. des Kraftstoffs zu messen und die gemessenen Temperaturwerte zusammen mit den zugeordneten Dichtewerten aufzuzeichnen. So lassen sich z.B. temperaturkompensierte Dichtewerte bestimmen. Durch eine derartige Aufzeichnung und Dokumentation der Dichte können Qualitätstrends nachgewiesen werden.

Es ergeben sich also zahlreiche Anwendungsmöglichkeiten in der Qualitätssicherung und der Datenverwaltung, z.B. im Tankstellenbereich, bei Tankfahrzeugen oder in einem Tanklager, aber auch für andere Flüssigkeiten, die nicht Kraftstoffe sind.

Im Folgenden wird die Erfindung anhand von Ausführungsbeispielen weiter erläutert. Die Zeichnungen zeigen in
- Figur: 1 eine Seitenansicht eines magnetostriktiven Füllstand- und Trennschichtmesssystems, das mit einer Ausführungs- form der erfindungsgemäßen Vorrichtung zum Bestimmen der Dichte einer Flüssigkeit ausgerüstet ist,
- Figur 2: einen Längsschnitt durch die Vorrichtung zum Bestimmen der Dichte einer Flüssigkeit gemäß Figur 1, wobei zwei Spiralblattfedern der Vorrichtung auch dreidimensional angedeutet sind, und
- Figur 3: eine Projektion einer Spiralblattfeder auf die Pa- pierebene, was gleichzeitig die Herstellung der Spi- ralblattfeder veranschaulicht.

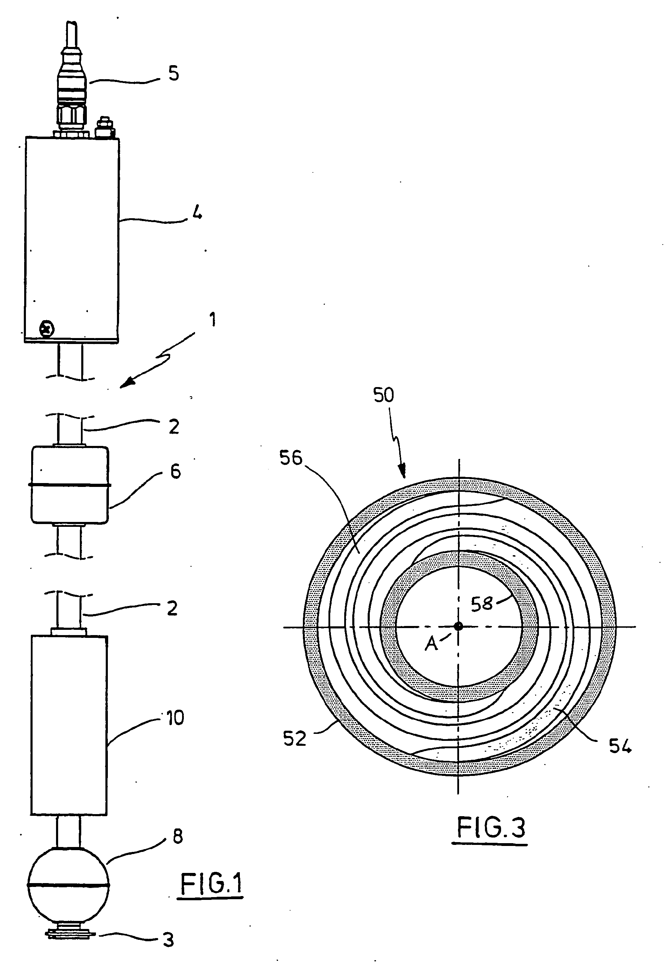

In Figur 1 ist zunächst ein herkömmliches Füllstand- und Trennschichtmesssystem 1 dargestellt, das mit einem magnetostriktiven Positionsmesssystem versehen ist und z.B. in einem Lagertank für Kraftstoff eingebaut sein kann.

Das Füllstand- und Trennschichtmesssystem 1 weist ein Schutzrohr 2 auf, das bis zu einer Endverbreiterung 3 an seinem unteren Ende reicht. Im eingebauten Zustand befindet sich die Endverbreiterung 3 kurz vor der tiefsten Stelle eines Lagertanks.

Im Inneren des Schutzrohrs 2 verläuft auf dessen Längsachse ein Messdraht eines magnetostriktiven Positionsmesssystems, der zu einer Elektronikeinheit 4 geführt ist. Die Elektronikeinheit 4 enthält an ihrer Oberseite einen Anschluss 5, um ein Signalkabel anzuschließen, das mit einer externen Auswerte- und Steuereinrichtung verbunden werden kann.

Magnetostriktive Messsystems sind bekannt, wie eingangs erläutert. Dabei wird ein Permanentmagnet als Positionsgeber genutzt. Durch den Magnetostriktionseffekt werden in einem magnetostriktiven Wellenleiter, hier dem in dem Schutzrohr 2 enthaltenen Messdraht, Ultraschallwellen erzeugt. Die Laufzeit dieser Ultraschallwellen kann mit hoher Präzision gemessen werden, wozu hier die Elektronikeinheit 4 genutzt wird, so dass sich die Position des Permanentmagneten z.B. bis auf 10 µm genau reproduzierbar bestimmen lässt. Es ist auch möglich, eine größere Anzahl von solchen magnetischen Positionsgebern auf einem magnetostriktiven Wellenleiter gleichzeitig oder praktisch gleichzeitig zu messen, was bereits bei dem Füllstand- und Trennschichtmesssystem in seiner herkömmlichen Ausgestaltung ausgenutzt wird.

Dazu ist ein Füllstandschwimmer 6 auf dem Schutzrohr 2 geführt, der an der Oberfläche der in dem Lagertank befindlichen Flüssigkeit schwimmt. Im Inneren des Füllstandschwimmers 6 befindet sich ein Permanentmagnet, mit dessen Hilfe über den Magnetostriktionseffekt die Position des Füllstandschwimmers 6, also der Füllstand in dem Lagertank, bestimmt werden kann.

Im unteren Bereich des Füllstand- und Trennschichtmesssystems 1 ist ein Trennschichtschwimmer 8 angeordnet, der ebenso wie der Füllstandschwimmer 6 längs des zur Führung dienenden Schutzrohrs 2 bewegbar ist und ebenfalls einen Permanentmagneten enthält. Der Trennschichtschwimmer 8 ist auf einen anderen Dichtebereich abgestimmt und schwimmt im Ausführungsbeispiel an einer Grenzfläche zwischen Wasser und spezifisch leichterem Kraftstoff. Daher ermöglicht es der Trennschichtschwimmer, den Pegel von Wasser zu bestimmen, das sich im Laufe der Zeit in einem Lagertank für Kraftstoff unterhalb von dem Kraftstoff ansammeln kann.

Um die Dichte des Kraftstoffs in dem Lagertank messen zu können, ist das Füllstand- und Trennschichtmesssystem 1 mit einer zusätzlichen Komponente versehen, nämlich einer Dichtebestimmungsvorrichtung 10.

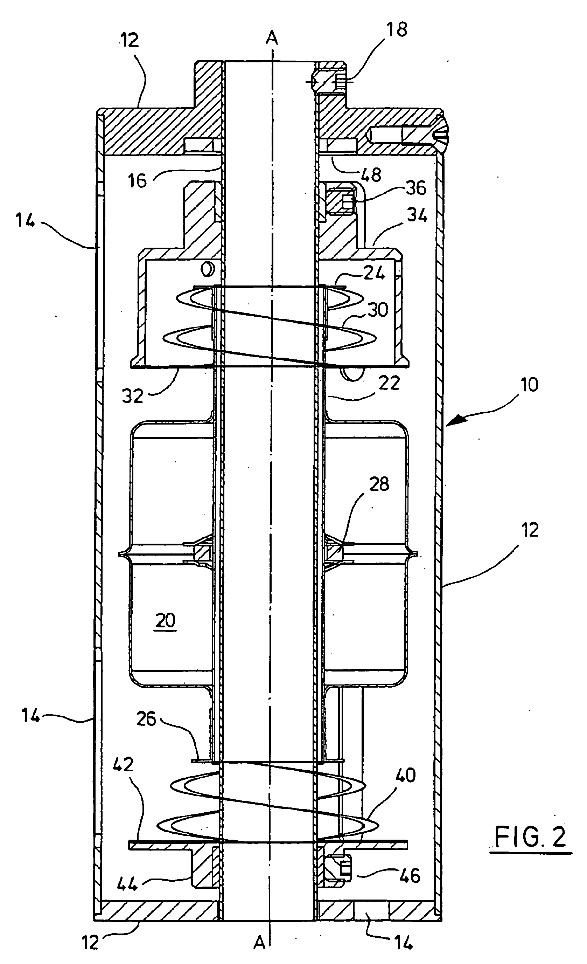

Die Dichtebestimmungsvorrichtung 10 ist in Figur 2 in einem vergrößerten Längsschnitt dargestellt.

Die Dichtebestimmungsvorrichtung 10 weist ein zylinderartiges Gehäuse 12 auf, dessen Mantelfläche und untere Stirnfläche mit Öffnungen 14 versehen sind, damit die Flüssigkeit bzw. der Kraftstoff, deren bzw. dessen Dichte bestimmt werden soll, problemlos ins Gehäuseinnere eintreten kann. Als innerer Abschluss des Gehäuses 12 ist ein Führungsrohr 16 vorgesehen, das sich entlang der Längsachse A des Gehäuses 12 erstreckt.

Die Dichtebestimmungsvorrichtung 10 lässt sich mit dem Führungsrohr 16 über das Schutzrohr 2 schieben und daran mit Hilfe einer Stellschraube feststellen. Die Stellschraube wird durch eine Gewindebohrung 18 gedreht, die sich im oberen Endbereich des Gehäuses 12 befindet.

Im Innenraum des Gehäuses 12 befindet sich ein hohler Auftriebskörper 20. Der Auftriebskörper 20 ist mit einer Aussparung versehen, in die ein Führungszylinder 22 eingelassen ist. Der Führungszylinder 22 ist länger, als der Auftriebskörper 20 hoch ist, so dass der Führungszylinder 22 sowohl nach oben als auch nach unten gegenüber dem Auftriebskörper 20 vorsteht. Der Innendurchmesser des Führungszylinders 22 ist etwas größer als der Außendurchmesser des Führungsrohrs 16. Der Führungszylinder 22 ist an den Austrittsstellen aus dem Auftriebskörper 20 dicht versiegelt. Am oberen Ende des Führungszylinders 22 ist ein flanschartig vorspringender oberer Anschlag 24 angebracht, am unteren Ende ein ähnlich geformter unterer Anschlag 26.

Im Innenraum des Auftriebkörpers 20 befindet sich ein Magnet 28, dessen Position entlang der Achse A mit Hilfe des magnetostriktiven Positionsmesssystems bestimmt werden kann.

Eine als Spiralblattfeder (siehe Figur 3) gestaltete Feder 30 ist mit ihrem unteren Ende an einer Befestigungsebene 32 eines oberen Anschlagkörpers 34 befestigt. Das obere Ende der Feder 30 ist an dem oberen Anschlag 24 des Führungszylinders 22 befestigt. Der obere Anschlagkörper 34 ist mit einer Madenschraube 36 an dem Führungsrohr 16 arretiert.

Eine im Ausführungsbeispiel baugleich mit der Feder 30 gestaltete Feder 40 ist mit ihrem unteren Ende an einer Befestigungsebene 42 eines unteren Anschlagkörpers 44 befestigt, während das obere Ende der Feder 40 an dem unteren Anschlag 26 des Führungszylinders 22 befestigt ist. Eine Madenschraube 46 dient zum Feststellen des unteren Anschlagkörpers 44 an dem Führungsrohr 16.

Im oberen Bereich des Gehäuses 12 ist ein Referenzmagnet 48 eingelassen, der ebenfalls als Positionsgeber in dem magnetostriktiven Positionsmesssystem eingerichtet ist.

Wie bereits erwähnt, sind die Federn 30 und 40 baugleich. Sie sind beide als Spiralblattfeder 50 ausgestaltet. Die Figur 3 zeigt eine Projektion der Spiralblattfeder 50 auf die Papierebene, was einer Projektion der Feder 30 auf die Befestigungsebene 32 bzw. der Feder 40 auf die Befestigungsebene 42 entspricht.

Im Ausführungsbeispiel weist die Spiralblattfeder 50 einen Basisring 52 auf. Von dem Basisring 52 gehen um 180° gegeneinander versetzt zwei Gänge aus, nämlich ein erster Gang 54 und ein zweiter Gang 56, die jeweils spiralartig nach innen verlaufen, bis sie, wiederum um 180° gegeneinander versetzt, auf einen inneren Ring 58 treffen.

Die Spiralblattfeder 50 ist im Ausführungsbeispiel aus einem ebenen dünnen Blech ausgeschnitten, das z.B. aus Federstahl oder Edelstahl besteht. Zum Schneiden kann ein mechanisches Schneidegerät benutzt werden, aber auch die Verwendung eines Schneidlasers kann vorteilhaft sein. Nach dem Ausschneiden aus dem Blechmaterial ist die Spiralblattfeder 50 also eben, was im Ausführungsbeispiel ihrem unbelasteten Zustand entspricht. Unter Belastung wird die Spiralblattfeder 50 in einer Richtung senkrecht zur Papierebene der Figur 3 auseinandergezogen, so dass sie eine dreidimensionalen Form annimmt, ähnlich wie in Figur 2 bei den Federn 30 und 40 dargestellt.

Da die Spiralblattfeder 50 aus dünnem Material gefertigt ist, ist die Breite des ersten Gangs 54 und des zweiten Gangs 56 deutlich größer als die Materialstärke. Dies bedeutet, dass der erste Gang 54 und der zweite Gang 56 gegen elastische Verformungen der Spiralblattfeder 50 in radialer Richtung, d.h. auf die Achse A zu oder von der Achse A weg, ein erheblich größeres Widerstandsmoment besitzen als bei elastischer Verformung in Richtung der Achse A.

Daher führen die Federn 30 und 40 den Auftriebskörper 20 gegen Verschiebungen in radialer Richtung sehr sicher und halten dabei den Führungszylinder 22 auf Abstand zu dem Führungsrohr 16, so dass bei einer Bewegung des Auftriebskörpers 20 keine unerwünschten Reibungskräfte auftreten. Dagegen lassen sich die Federn in Längsrichtung der Achse A leicht verformen. Sie sind also sehr empfindlich, so dass sich der Auftriebskörper 20 bereits bei kleinen Dichteänderungen nach oben oder unten verlagert.

Im Ausführungsbeispiel gemäß Figur 3 weist die Spiralblattfeder 50 zwei Gänge 54, 56 auf. Es ist aber auch möglich, nur einen Gang vorzusehen oder mehr als zwei Gänge. Bei drei Gängen sind die einzelnen Gänge vorzugsweise um 120° gegeneinander versetzt. Je mehr Gänge die Spiralblattfeder enthält, um so sicherer wirkt sie als Führung gegen radiale Verschiebungen, wird dabei andererseits aber auch steifer und weniger empfindlich.

Im Ausführungsbeispiel ist die Auftriebskraft des Auftriebskörpers 20, wenn er in den Kraftstoff in dem Lagertank vollständig eingetaucht ist, größer als sein Gewicht. Daher bewegt sich der Auftriebskörper 20 von dem unteren Anschlagkörper 44 weg nach oben, wird aber durch die dabei in Richtung nach oben gedehnten und auf Zug beanspruchten Federn 30 und 40 an einer weiteren Aufwärtsbewegung gehindert. Es stellt sich also ein Gleichgewichtszustand zwischen der Auftriebskraft einerseits und der Gewichtskraft sowie den Federkräften andererseits ein. Je größer die Dichte des Kraftstoffs (genauer gesagt, je größer sein spezifisches Gewicht), um so größer ist die Auftriebskraft, d.h. um so stärker werden die Federn 30 und 40 beansprucht, was größeren Längenänderungen der Federn 30, 40 und somit einem größeren Verschiebeweg des Auftriebskörpers 20 entspricht. Die Gleichgewichtsposition des Auftriebskörpers 20 kann mit Hilfe des magnetostriktiven Positionsmesssystems über den als Positionsgeber dienenden Magneten 28 ermittelt werden.

Der Verschiebeweg des Auftriebskörpers 20 ist also in eindeutiger Weise mit der Dichte der Flüssigkeit bzw. des Kraftstoffs verknüpft. Er verläuft weitgehend linear mit der Dichte mit einem geringen quadratischen Anteil. Die Parameter der Verknüpfung zwischen Dichte und Verschiebeweg können durch eine Kalibrierungsmessung bestimmt und auf das magnetostriktive Messsystem übertragen werden.

Der Referenzmagnet 48 kann ebenfalls als Positionsgeber in dem magnetostriktiven Positionsmesssystem benutzt werden. Daher kann die Dichtebestimmungsvorrichtung 10 verwendet werden, ohne dass Kalibrationsmessungen für die absolute Höhe des Magneten 28 durchgeführt werden müssen. Die elastische Deformation der Feder 30 bzw. 40, die aufgrund des erläuterten Gleichgewichts ein Maß für die Dichte des Kraftstoffs ist, ergibt sich aus der Differenz der Positionen des Magneten 28 und des Referenzmagneten 48.

Die Positionen des Magneten 28 und des Referenzmagneten 48 werden mit hoher Präzision mit dem magnetostriktiven Positionsmesssystem gemessen. Mit den vorhandenen und abgespeicherten Kalibrationsdaten wird im Ausführungsbeispiel durch den im magnetostriktiven Positionsmesssystem vorhandenen Mikrocontroller aus den Positionen der Magneten der Dichtewert der Flüssigkeit berechnet. Dieser Wert kann dann über eine Schnittstelle übertragen und an geeigneter Stelle zur Anzeige gebracht werden bzw. für weitere Berechnungen und Bewertungen verwendet werden. Z.B. kann mit einem bekannten Wärmeausdehnungskoeffizienten die auf eine Referenztemperatur bezogene Dichte berechnet werden. Dies erleichtert einen Vergleich bezüglich der Qualitätsbewertung des gelagerten Produkts.

Im Prinzip ist auch eine Messung ohne den Referenzmagneten 48 möglich. Als Bezug kann dann z.B. die Position des Magneten in dem Auftriebskörper an seinem unteren Anschlagspunkt gewählt werden, nachdem die Dichtebestimmungsvorrichtung auf dem Schutzrohr 2 des magnetostriktiven Positionsmesssystem fixiert ist.

Die Möglichkeit, entlang eines magnetostriktiven Positionsmesssystems mehrere Dichtebestimmungsvorrichtungen anzuordnen, wurde bereits eingangs erläutert. Ferner finden sich dort Ausführungen zu den Anwendungsmöglichkeiten, insbesondere im Bereich einer Tankstelle.

## Patentansprüche

1. Vorrichtung zum Bestimmen der Dichte einer Flüssigkeit, mit einem Auftriebskörper (20), mit mindestens einer an dem Auftriebskörper (20) angreifenden Feder (30, 40), deren elastische Deformation ein Maß für die Auftriebskraft des Auftriebskörpers (20) ist, und mit einem Magneten (28), der für die Erfassung der elastischen Deformation der Feder (30, 40) mittels eines magnetostriktiven Positionsmesssystems (1) eingerichtet ist, **dadurch gekennzeichnet, dass** die Feder (30, 40) als Spiralblattfeder (50) gestaltet ist.

2. Vorrichtung nach Anspruch 1, **dadurch gekennzeichnet, dass** die Feder (30, 40; 50) mit einem Ausschnitt aus einem ebenen Blech gefertigt ist.

3. Vorrichtung nach Anspruch 2, **dadurch gekennzeichnet, dass** die Feder (30, 40; 50) eingängig, zweigängig oder mit mehr als zwei Gängen gestaltet ist.

4. Vorrichtung nach einem der Ansprüche 1 bis 3, **dadurch gekennzeichnet, dass** der Auftriebskörper (20) einen oberen Bereich und einen unteren Bereich aufweist und dass zwei Federn (30, 40) vorgesehen sind, die vorzugsweise von gleicher Bauart sind, wobei die eine Feder (30) am oberen Bereich des Auftriebskörpers (20) und die andere Feder (40) am unteren Bereich des Auftriebskörpers (20) angreift.

5. Vorrichtung nach einem der Ansprüche 1 bis 4, **gekennzeichnet durch** einen fixierten Referenzmagneten (48), wobei die Differenz der Positionen des Magneten (28) und des Referenzmagneten (48) entlang eines Messdrahts des magnetostriktiven Positionsmesssystems (1) ein Maß für die zu bestimmende elastische Deformation der Feder (30, 40) ist.

6. Vorrichtung nach einem der Ansprüche 1 bis 5, **dadurch gekennzeichnet, dass** der Auftriebskörper (20) eine Aussparung zur Aufnahme eines Führungsrohrs (16) aufweist.

7. Vorrichtung nach einem der Ansprüche 1 bis 6, **dadurch gekennzeichnet, dass** die Vorrichtung (10) zum Bestimmen der Dichte von Kraftstoff eingerichtet ist.

8. Vorrichtung nach Anspruch 7, **dadurch gekennzeichnet, dass** das magnetostriktive Positionsmesssystem bei einem in einem Lagertank für Kraftstoff vorhandenen Füllstandmesssystem (1) und/oder Trennschichtmesssystem (1) vorgesehen ist, wobei der Lagertank vorzugsweise ein Lagertank auf einer Tankstelle oder in einem Tanklager oder ein Nutzlasttank eines Tankkraftfahrzeugs ist.

9. Vorrichtung nach Anspruch 8, **gekennzeichnet durch** mehrere Auftriebskörper mit zugeordneten Federn und Magneten, die in unterschiedlichen Höhen des magnetostriktiven Positionsmesssystems angeordnet sind.

10. Verfahren zum Bestimmen der Dichte einer Flüssigkeit, wobei der Auftriebskörper (20) einer Vorrichtung (10) nach einem der Ansprüche 1 bis 6 vollständig in die Flüssigkeit eingetaucht wird und die Auftriebskraft des Auftriebskörpers (20) über die elastische Deformation der Feder (30, 40) mittels eines magnetostriktiven Positionsmesssystems (1) bestimmt wird.

11. Verfahren nach Anspruch 10, **dadurch gekennzeichnet, dass** die Dichte von Kraftstoff bestimmt wird, wobei ein magnetostriktives Positionsmesssystem verwendet wird, das bei einem in einem Lagertank für Kraftstoff vorhandenen Füllstandmesssystem (1) und/oder Trennschichtmesssystem (1) vorgesehen ist, wobei der Lagertank vorzugsweise ein Lagertank auf einer Tankstelle oder in einem Tanklager oder ein Nutzlasttank eines Tankkraftfahrzeugs ist.

12. Verfahren nach Anspruch 11, **dadurch gekennzeichnet, dass** durch mehrere Auftriebskörper mit zugeordneten Federn und Magneten, die in unterschiedlichen Höhen des magnetostriktiven Positionsmesssystems angeordnet sind, die Dichte in unterschiedlichen Höhen des Lagertanks bestimmt wird.

13. Verfahren nach Anspruch 11 oder 12, **dadurch gekennzeichnet, dass** für die Bestimmung der Dichte erforderliche Rechenoperationen auf einem in der Nähe des Lagertanks vorhandenen Rechner durchgeführt werden, wobei vorzugsweise aus einem bekannten Volumen des Kraftstoffs und aus der bestimmten Dichte des Kraftstoffs die Masse des Kraftstoffs berechnet wird, und/oder wobei die bestimmte Dichte der Flüssigkeit einem vorgegebenen Dichtebereich als Maß für die Zusammensetzung und/oder Qualität der Flüssigkeit zugeordnet wird.

14. Verfahren nach einem der Ansprüche 10 bis 13, **dadurch gekennzeichnet, dass** ein Alarm und/oder eine Notfallabschaltung ausgelöst wird, wenn die bestimmte Dichte außerhalb eines vorgegebenen Bereichs liegt.

15. Verfahren nach einem der Ansprüche 10 bis 14, **dadurch gekennzeichnet, dass** im Laufe der Zeit bestimmte Werte für die Dichte aufgezeichnet werden, wobei vorzugsweise auch die Temperatur der Flüssigkeit gemessen wird und die gemessenen Temperaturwerte zusammen mit den zugeordneten bestimmten Werten für die Dichte aufgezeichnet werden.

## Claims

1. Device for determining the density of a fluid, comprising a buoyancy body (20) with at least one spring (30, 40) acting on the buoyancy body (20), the elastic deformation of which is a measure for the buoyancy force of the buoyancy body (20), and comprising a magnet (28) which is set up to determine the elastic deformation of the spring (30, 40) by means of a magnetostrictive position measuring system (1), **characterised in that** the spring (30, 40) is designed as a spiral leaf spring (50).

2. Device according to claim 1, **characterised in that** the spring (30, 40; 50) is produced by a cut-out from a flat sheet.

3. Device according to claim 2, **characterised in that** the spring (30, 40; 50) is designed to be single-threaded, double-threaded or with more than two threads.

4. Device according to any one of claims 1 to 3, **characterised in that** the buoyancy body (20) comprises an upper section and a lower section and **in that** two springs (30, 40) are provided, which preferably have the same design, wherein one spring (30) acts on the upper section of the buoyancy body (20) and the other spring (40) acts on the lower section of the buoyancy body (20).

5. Device according to any one of claims 1 to 4, **characterised in that** by means of a fixed reference magnet (48), wherein the difference in the positions of the magnet (28) and the reference magnet (48) along a measurement wire of the magnetostrictive position measuring system (1) is a measure for the elastic deformation of the spring (30, 40) to be determined.

6. Device according to any one of claims 1 to 5, **characterised in that** the buoyancy body (20) comprises a recess for mounting a guide pipe (16).

7. Device according to any one of claims 1 to 6, **characterised in that** the device (10) is set up to determine the density of fuel.

8. Device according to claim 7, **characterised in that** the magnetostrictive position measuring system with a filling level measuring system (1) and/or separating layer measuring system (1) provided in a storage tank for fuel is provided, wherein the storage tank is preferably a storage tank at a petrol station or in tank storage or a payload tank of a tank vehicle.

9. Device according to claim 8, **characterised by** several buoyancy bodies with assigned springs and magnets, which are arranged at different levels of the magnetostrictive position measuring system.

10. Method for determining the density of a fluid, wherein the buoyancy body (20) of a device (10) according to one of claims 1 to 6 is immersed completely in the fluid and the buoyancy force of the buoyancy body (20) is determined by the elastic deformation of the spring (30, 40) by means of a magnetostrictive position measuring system (1).

11. Method according to claim 10, **characterised in that** the density of fuel is determined, whereby a magnetostrictive position measuring system is used, which is provided in the case of a filling level measuring system (1) and/or separating layer measuring system (1) provided in a storage tank for fuel, wherein the storage tank is preferably a storage tank at a petrol station or in tank storage or payload tank of a tanking vehicle.

12. Method according to claim 11, **characterised in that** by means of several buoyancy bodies with assigned springs and magnets, which are arranged at different levels of the magnetostrictive position measuring system, the density is determined at different levels of the storage tank.

13. Method according to claim 11 or 12, **characterised in that** to determine the density necessary calculation operations are performed on a computer provided in the vicinity of the storage tank, wherein preferably from a known volume of the fuel and from the specific density of the fuel the mass of the fuel is calculated, and/or wherein the determined density of the fluid is assigned to a predetermined density range as a measure for the composition and/or quality of the fluid.

14. Method according to any one of claims 10 to 13, **characterised in that** an alarm and/or an emergency shutoff switch is triggered, when the determined density lies outside a predetermined range.

15. Method according to any one of claims 10 to 14, **characterised in that** over time specific values are recorded for the density, wherein preferably also the temperature of the fluid is measured and the measured temperature values together with the assigned specific values for the density are recorded.

## Revendications

1. Dispositif destiné à déterminer la densité d'un liquide, comportant un flotteur (20), comportant au moins un ressort (30, 40), qui vient en contact avec le flotteur (20) et dont la déformation élastique est un critère pour la force ascensionnelle du flotteur (20), et comportant un aimant (28) qui est conçu pour détecter la déformation élastique du ressort (30, 40) au moyen d'un système magnétostrictif de mesure de position (1), **caractérisé en ce que** le ressort (30, 40) est réalisé sous la forme d'un ressort spirale (50).

2. Dispositif selon la revendication 1, **caractérisé en ce que** le ressort (30, 40; 50) est réalisé avec une découpe hors d'une tôle plane.

3. Dispositif selon la revendication 2, **caractérisé en ce que** le ressort (30, 40; 50) est réalisé avec une spire, deux spires ou avec plus de deux spires.

4. Dispositif selon l'une quelconque des revendications 1 à 3, **caractérisé en ce que** le flotteur (20) comporte une partie supérieure et une partie inférieure, et **en ce qu'**il est prévu deux ressorts (30, 40) qui, de préférence, sont de même type, un ressort (30) entrant en contact avec la partie supérieure du flotteur (20) et l'autre ressort (40) entrant en contact avec la partie inférieure du flotteur (20).

5. Dispositif selon l'une quelconque des revendications 1 à 4, **caractérisé par** un aimant de référence (48) immobilisé, la différence entre les positions de l'aimant (28) et de l'aimant de référence (48) le long d'un fil de mesure du système magnétostrictif de mesure de position (1) étant un critère pour la déformation élastique à déterminer du ressort (30, 40).

6. Dispositif selon l'une quelconque des revendications 1 à 5, **caractérisé en ce que** le flotteur (20) comporte un évidement destiné à recevoir un tube de guidage (16).

7. Dispositif selon l'une quelconque des revendications 1 à 6, **caractérisé en ce que** le dispositif (10) est configuré pour déterminer la densité du carburant.

8. Dispositif selon la revendication 7, **caractérisé en ce que** le système magnétostrictif de mesure de position est prévu avec un système de mesure du niveau (1) et/ou un système de mesure d'interface (1), présent dans la cuve de stockage pour carburant, ladite cuve de stockage étant de préférence une cuve de stockage dans une station-service ou dans un entrepôt de carburant ou une citerne d'un véhicule citerne.

9. Dispositif selon la revendication 8, **caractérisé par** plusieurs flotteurs avec des ressorts et des aimants associés, qui sont disposés à des hauteurs différentes du système magnétostrictif de mesure de position.

10. Procédé destiné à déterminer la densité d'un liquide, dans lequel procédé le flotteur (20) d'un dispositif (10) selon l'une quelconque des revendications 1 à 6 est totalement immergé dans le liquide et la force ascensionnelle du flotteur (20) est déterminée au moyen d'un système magnétostrictif de mesure de position (1) par l'intermédiaire de la déformation élastique du ressort (30, 40).

11. Procédé selon la revendication 10, **caractérisé en ce que** la densité du carburant est déterminée, un système magnétostrictif de mesure de position (1) étant utilisé, lequel est prévu avec un système de mesure du niveau (1) et/ou un système de mesure d'interface (1), présent dans la cuve de stockage pour carburant, ladite cuve de stockage étant de préférence une cuve de stockage dans une station-service ou dans un entrepôt de carburant ou une citerne d'un véhicule citerne.

12. Procédé selon la revendication 11, **caractérisé en ce que** la densité est déterminée dans différentes hauteurs de la cuve de stockage par plusieurs flotteurs avec des ressorts et des aimants associés, qui sont disposés à des hauteurs différentes du système magnétostrictif de mesure de position.

13. Procédé selon la revendication 11 ou 12, **caractérisé en ce que** des calculs, nécessaires pour la détermination de la densité, sont effectués sur un ordinateur présent à proximité de la cuve de stockage, la masse du carburant étant calculée, de préférence, à partir d'un volume connu de carburant et à partir de la densité déterminée du carburant, et/ou la densité déterminée du liquide étant associée à une plage de densité prédéfinie en tant que critère de la composition et/ou de la qualité du liquide.

14. Procédé selon l'une quelconque des revendications 10 à 13, **caractérisé en ce qu'**une alarme et/ou une déconnexion d'urgence sont déclenchées lorsque la densité déterminée se situe en dehors d'une plage prédéfinie.

15. Procédé selon l'une quelconque des revendications 10 à 14, **caractérisé en ce que** des valeurs déterminées au fil du temps pour la densité sont enregistrées, sachant que, de préférence, la température du liquide est mesurée et les valeurs de température mesurées sont enregistrées conjointement avec les valeurs associées déterminées pour la densité.
